# EUROPÄISCHE PATENTSCHRIFT

(11) **EP 3 475 790 B1**
(45) Veröffentlichungstag und Bekanntmachung des Hinweises auf die Patenterteilung: **04.11.2020**
(21) Anmeldenummer: 17737219.0
(22) Anmeldetag: 22.06.2017
(51) Int. Cl.: G06F 3/01, G06F 3/0354

(54) **FEDERNDER BATTERIEKONTAKT MIT SENSORSCHUTZ**
SPRING-TYPE BATTERY CONTACT HAVING SENSOR PROTECTION
CONTACT ÉLASTIQUE POUR BATTERIE DOTÉ D'UNE PROTECTION DE CAPTEUR

(30) Priorität: 28.06.2016 DE 202016103403 U
(43) Veröffentlichungstag der Anmeldung: 01.05.2019
(73) Patentinhaber: Stabilo International GmbH, 90562 Heroldsberg (DE)
(72) Erfinder: KÄMPF, Karl-Peter, 91341 Röttenbach (DE)
(74) Vertreter: Grünecker Patent- und Rechtsanwälte PartG mbB
(86) Internationale Anmeldenummer: PCT/EP2017/065403
(87) Internationale Veröffentlichungsnummer: WO 2018/001859

(56) Entgegenhaltungen:
- EP-A1- 2 590 060
- US-A- 5 446 633
- US-A1- 2005 248 549
- US-A1- 2007 014 490
- US-A1- 2008 166 175

## Beschreibung

### Stand der Technik

Die Erfindung betrifft einen elektronischen Schreibstift der im Oberbegriff des Patentanspruchs 1 angegebenen Art, sowie ein Verfahren der im Oberbegriff des Patentanspruchs 13 angegebenen Art.

Die ständig zunehmende Verwendung von elektronischen Informations- und Kommunikationssystemen, insbesondere von Personal Computern (PCs), Laptops, Tablets und Smartphones in Alltag, Freizeit und Arbeitswelt macht es sinnvoll, Verbesserungen von Mensch-Maschinen-Schnittstellen zu entwickeln.

Als Mensch-Maschinen-Schnittstellen sind dabei neben Eingabevorrichtungen wie Tastatur, Maus oder berührungsempfindlichen Oberflächen insbesondere elektronische Schreibstifte von Interesse. Elektronische Schreibstifte haben dabei unter anderem den Vorteil, dass sie die Funktionalität und Einfachheit des Schreibens mit einem Stift auf einer Oberfläche mit den vielfältigen Möglichkeiten elektronischer Datenverarbeitung verbinden können. Dabei ist es wünschenswert, dass sich der Elektronische Schreibstift einem konventionellen Stift so weit wie möglich in Erscheinung, Verfügbarkeit und Handhabung ähnelt.

In der WO02/07424A2 wird beispielsweise ein elektronisches Informationssystem zur Handschriftenerfassung beschrieben, welches einen elektronischen Schreibstift und ein Tablett mit druckempfindlicher bzw. induktionsempfindlicher Oberfläche aufweist und bei der die Bewegungen des Stiftes bzw. der Stiftspitze wahlweise von der druckempfindlichen bzw. induktionsempfindlichen Oberfläche des Tabletts oder von Beschleunigungssensoren oder optischen Sensoren erfasst werden. Weitere Beispiele für herkömmliche elektronische Schreibstifte gemäß Oberbegriff des Patentanspruchs 1 sind unter anderem beschrieben in der US 2005/248549 A1, der EP 2 590 060 A1 und in der US 2007/014490 A1.

Die Sensordaten können dann an einen PC drahtlos übermittelt werden, der basierend auf den empfangenen Stiftbewegungsdaten eine Handschriftenerfassung durchführen kann.

Nachteilig bei bekannten elektronischen Schreibstiften ist jedoch unter anderem, dass sie weniger robust sind als herkömmliche konventionelle nicht elektronische Schreibstifte. Insbesondere die elektronische Sensorik von elektronischen Schreibstiften kann anfällig sein und beispielsweise leicht durch Stürze oder mechanische Überbeanspruchungen beschädigt werden.

### Aufgabe

Es ist somit Aufgabe der Erfindung einen elektronischen Schreibstift zu verbessern, beispielsweise hinsichtlich der mechanischen Robustheit des elektronischen Schreibstiftes bei geringstem mechanischem Aufwand.

### Lösung

Dies wird erfindungsgemäß durch einen elektronischen Schreibstift nach Anspruch 1 und ein Verfahren nach Anspruch 13 erreicht. Vorteilhafte Ausführungsformen und Weiterbildungen sind Gegenstand der Unteransprüche. Ausführungsformen, die nicht unter den Schutzbereich der Ansprüche fallen, sind nicht Teil der vorliegenden Erfindung.

Ein erfindungsgemäßer elektronischer Schreibstift mit Schreibstiftpositionserkennung kann z.B. wenigstens eine elektrische Spannungsquelle, wenigstens eine digitale Steuereinheit, wenigstens ein Kraftübertragungselement, z.B. eine Schreibmine oder ein ähnliches Bauteil zur Übertragung der Schreibdruckkraft und wenigstens einen Kraftsensor bzw. Drucksensor zur Messung einer / der Schreibdruckkraft umfassen.

Ein derartiger Kraftsensor bzw. Drucksensor kann unter anderem beispielsweise ein Gehäuse aufweisen sowie einen aus dem Gehäuse heraus ragenden verschiebbaren Zapfen. Beispielsweise kann dabei der Zapfen verschiebbar gelagert sein, z.B. für Verschiebungen entlang der Längsachse des elektronischen Schreibstiftes oder für Verschiebungen im Wesentlichen parallel zu der Längsachse des elektronischen Schreibstiftes. Dabei kann der verschiebbare Zapfen z.B. zudem im Wesentlichen senkrecht zu einer Oberfläche eines möglichen Kraftsensorgehäuses aus dem besagten Gehäuse herausragen. Ein solcher Zapfen kann auch als Meßzapfen bezeichnet werden. Besagtes beispielhaftes Kraftübertragungselement, z.B. eine Schreibmine, kann dabei z.B. gegen einen möglichen Meßzapfen des Kraftsensors drücken und den Meßzapfen verschieben oder den Meßzapfen zusammen mit dem Kraftsensor verschieben.

Unter einem Kraftübertragungselement zur Übertragung einer / der Schreibdruckkraft kann neben einer Schreibmine beispielsweise auch eine Leiterplatine bzw. Leiterplatte, oder z.B. eine Stiftspitze des elektronischen Schreibstiftes, oder ein anderes Bauteil geeignet zur Übertragung einer Druckkraft auf den Kraftsensor, insbesondere zur Übertragung einer Schreibdruckkraft, verstanden werden. Dabei kann zudem das Kraftübertragungselement bzw. die beispielhafte Schreibmine bzw. die beispielhafte Stiftspitze des elektronischen Schreibstiftes elektronische Komponenten, beispielsweise elektrisch kapazitiv wirkende Komponenten, aufweisen.

Zudem kann der elektronische Schreibstift wenigstens ein elastisches Mittel aufweisen, wobei das wenigstens eine elastische Mittel dazu konfiguriert sein kann, einer auf den wenigstens einen Kraftsensor einwirkenden Druckkraft eine der einwirkenden Druckkraft entgegenwirkende Kraft Dabei kann die auf den Kraftsensor einwirkende Druckkraft beispielsweise über ein/das Kraftübertragungselement, z.B. eine/die Schreibmine, auf den Kraftsensor übertragen werden, wobei z.B. das Kraftübertragungselement, z.B. eine/die Schreibmine, eine/die Schreibdruckkraft welche z.B. bei Gebrauch des elektronischen Schreibstiftes, beispielsweise beim Schreiben auf einem Substrat, auf die Stiftspitze, z.B. auf die Schreibminenspitze, einwirkt, an den Kraftsensor überträgt.

Das Kraftübertragungselement, beispielsweise die Schreibmine, des elektronischen Schreibstiftes kann dabei verschiebbar gelagert sein, z.B. verschiebbar gelagert sein für Verschiebungen entlang der Längsachse des elektronischen Schreibstiftes oder für Verschiebungen im Wesentlichen parallel zu der Längsachse des elektronischen Schreibstiftes.

Unter der Schreibdruckkraft, bzw. unter der von dem wenigstens einen Kraftsensor gemessenen Druckkraft, kann beispielsweise eine Axialdruckkraft verstanden werden, welche von dem Kraftübertragungselement, z.B. einer Schreibmine, z.B. beim Schreiben auf einem Schreibsubstrat, auf den Kraftsensor ausgeübt werden kann.

Mit anderen Worten kann die auf den wenigstens einen Kraftsensor einwirkende Druckkraft dabei beispielsweise daher rühren, dass das Kraftübertragungselement, z.B. die Schreibmine, des elektronischen Schreibstiftes verschoben wird, z.B. entlang der Längsachse des elektronischen Schreibstiftes oder im Wesentlichen parallel zu der Längsachse des elektronischen Schreibstiftes, und direkt oder indirekt gegen den wenigstens einen Kraftsensor drückt, beispielsweise wenn beim Schreiben mit dem elektronischen Schreibstift das Kraftübertragungselement auf bzw. gegen ein Schreibsubstrat gedrückt wird.

Der wenigstens eine Kraftsensor des elektronischen Schreibstiftes kann dabei ebenso verschiebbar entlang der Längsachse des elektronischen Schreibstiftes oder verschiebbar im Wesentlichen parallel zu der Längsachse des elektronischen Schreibstiftes angeordnet sein.

Das wenigstens eine elastische Mittel kann so konfiguriert sein, die auf den Kraftsensor einwirkenden Kräfte derart zu begrenzen bzw. abzuschwächen bzw. zu dämpfen bzw. abzufedern, dass die Druckkraftbelastungsgrenze des wenigstens einen Kraftsensors nicht überschritten wird.

Der elektronische Schreibstift kann zudem wenigstens ein Stoppmittel, z.B. in Form eines Anschlags, aufweisen, welches dazu konfiguriert sein kann, das Kraftübertragungselement, z.B. die Schreibmine, nach einem vorgegebenen Verschiebeweg des Kraftübertragungselements entlang der Längsachse des elektronischen Schreibstiftes oder im Wesentlichen parallel zur Längsachse des elektronischen Schreibstiftes zu stoppen.

Das optionale Stoppmittel bzw. der optionale Anschlag zur Begrenzung der Verschiebbarkeit des Kraftübertragungselements, z.B. der Schreibmine, insbesondere zur Begrenzung der Verschiebbarkeit des Kraftübertragungselements in Richtung des der Stiftspitze, z.B. der Schreibminenspitze, entgegengesetzten Endes des Schreibstiftes, kann beispielsweise als Spant des Gehäuses des elektronischen Schreibstiftes ausgeführt sein.

Das Stoppmittel bzw. der Anschlag bzw. der Spant kann also die Verschiebung des Kraftübertragungselements, z.B. der Schreibmine, entlang der Längsachse des elektronischen Schreibstiftes oder im Wesentlichen parallel zur Längsachse des elektronischen Schreibstiftes begrenzen.

Gleichzeitig kann das Stoppmittel bzw. der Anschlag bzw. der Spant so gestaltet sein, dass eine Verschiebbarkeit des Kraftsensors entlang der Längsachse des elektronischen Schreibstiftes oder im Wesentlichen parallel zu der Längsachse des elektronischen Schreibstiftes durch dieses Stoppmittel nicht begrenzt bzw. nicht beschränkt wird. Mit anderen Worten kann das Stoppmittel bzw. der Anschlag bzw. der Spant so gestaltet sein, dass die mögliche Länge des möglichen Verschiebeweges des Kraftsensors größer sein kann als die mögliche maximale Länge des möglichen Verschiebeweges des Kraftübertragungselements, z.B. der Schreibmine.

Da beispielsweise der Durchmesser des Kraftübertragungselements, z.B. der Schreibmine, größer als der mittlere Durchmesser des Kraftsensors sein kann, kann beispielsweise das Stoppmittel bzw. der Anschlag als durch einen in der Mitte durchbrochenen Spant innerhalb des Gehäuses des elektronischen Schreibstiftes realisiert werden.

Alternativ oder zusätzlich kann das Stoppmittel auch in den Kraftsensor integriert sein und z.B. ein Teil eines / des Kraftsensorgehäuses sein. Beispielsweise ist unter anderem denkbar, dass das Gehäuse des Kraftsensors und/oder das Kraftübertragungselement so gestaltet sein können, dass das Kraftübertragungselement, welches z.B. gegen einen beispielhaften möglichen Meßzapfen drücken und ihn verschieben kann, auf dem Kraftsensorgehäuse, bzw. auf einem Teil des Kraftsensorgehäuse welches nicht der Meßzapfen ist, aufsetzen kann, und so die mögliche maximale Länge des möglichen Verschiebeweges des Kraftübertragungselements begrenzen kann. Die Anordnung bzw. die Wahl der Geometrie und/oder die Wahl der Wandstärke eines solchen optionalen Spantes kann dabei beispielsweise in Abhängigkeit der Geometrie, z.B. die Höhe bzw. Breite des Kraftsensors, und/oder in Abhängigkeit eines vorgegebenen Verschiebeweges des Kraftübertragungselements, z.B. der Schreibmine, erfolgen.

Falls der Kraftsensor größer als das Kraftübertragungselement ist, kann z.B. ein Rücksprung im Durchmesser des Kraftübertragungselements an dem der Stiftspitze abgewandten Ende eine ähnliche Lösung bieten, die den Verschiebungsweg des Kraftübertragungselements, z.B. der Schreibmine begrenzt, indem beispielsweise nur der Teil des Kraftübertragungselements nach dem Rücksprung in den Spant eintauchen kann.

Der beispielhafte vorgegebene Verschiebeweg des Kraftübertragungselements, z.B. der Schreibmine, bzw. die Position des wenigstens einen Stoppmittels kann dabei so gewählt sein, dass über die gesamte Länge des Verschiebeweges die auf den wenigstens einen Kraftsensor wirkende Druckkraft, bzw. die durch das wenigstens eine elastische Mittel erzeugte Druckkraft, unterhalb der Druckkraftbelastungsgrenze des Kraftsensors liegt.

Die der besagten auf den wenigstens einen Kraftsensor einwirkenden Druckkraft von dem wenigstens einen elastischen Mittel erzeugte entgegenwirkende Kraft kann unter anderem dadurch erzeugt werden, dass die beispielsweise über eine Verschiebung des Kraftübertragungselements, z.B. der Schreibmine, auf den Kraftsensor wirkende Druckkraft das elastische Mittel deformiert und diese Deformation aufgrund der Elastizität des elastischen Mittels eine Gegenkraft, z.B. eine Federkraft, erzeugt, welche der auf den wenigstens einen Kraftsensor einwirkenden Druckkraft entgegen gerichtet ist.

Das Kraftübertragungselement, z.B. die Schreibmine, kann sich bei Einwirkung einer Druckkraft, wie beispielsweise einer Schreibdruckkraft, umso weiter nach hinten / in Richtung auf das elastische Mittel verschieben, je größer diese Kraft wird. Typischerweise können z.B. beim Schreiben Schreibdruckkräfte bzw. Andruckkräfte von etwa 2 bis 3 N erreicht werden. In Ausnahmefällen, wie beispielsweise beim Aufprall des elektronischen Schreibstiftes auf dem Boden nach einem Sturz des Schreibstiftes, können jedoch erheblich höhere Kräfte auf das Kraftübertragungselement, z.B. die Schreibmine, bzw. den Kraftsensor einwirken.

Zusätzlich zu dem elastischen Mittel kann daher der elektronische Schreibstift eine weitere Kraftbegrenzung, wie beispielsweise besagtes Stoppmittel bzw. besagten Anschlag, aufweisen.

Bei einer genügend hohen auf das Kraftübertragungselement, z.B. die Schreibmine, einwirkenden Druckkraft und einer daraus resultierenden genügend weiten Verschiebung des Kraftübertragungselements kann dann beispielsweise das Kraftübertragungselement gegen das Stoppmittel, beispielsweise einen Anschlag oder Spant, gedrückt werden.

Der elektronische Schreibstift kann dabei so ausgelegt sein, dass die beim Erreichen des Stoppmittels bzw. des Anschlags wirksame Kraft beispielsweise zwischen 5 und 50 N, insbesondere beispielsweise zwischen 10 und 15 N liegen kann.

Ein erfindungsgemäßer elektronischer Schreibstift bietet beispielsweise den Vorteil, dass durch die Elastizität des wenigstens einen elastischen Mittels die auf den wenigstens einen Kraftsensor einwirkende Druckkraft proportional zu seiner Verschiebung ist.

Ein erfindungsgemäßer elektronischer Schreibstift kann also die auf den Kraftsensor einwirkenden Kräfte derart abschwächen bzw. dämpfen bzw. abfedern, dass die Druckkraftbelastungsgrenze des wenigstens einen Kraftsensors nicht überschritten wird.

Der potenziell mögliche Verschiebeweg des Kraftsensors kann, vorzugsweise sollte, dabei größer sein als der mögliche Verschiebeweg des Kraftübertragungselements, z.B. der Schreibmine, so dass die Kraft bzw. Druckkraft, die auf den Kraftsensor wirkt, begrenzt werden kann, beispielsweise begrenzt werden kann auf einen Wert, der beispielsweise beim Erreichen des Stoppmittels bzw. beim Erreichen des Anschlags durch das Kraftübertragungselement, z.B. die Schreibmine, auf den Kraftsensor einwirkt.

Dabei kann beispielsweise der mögliche Verschiebeweg des Kraftsensors so gewählt werden, dass mögliche Einschränkungen in Bezug auf mögliche Schreibwinkel des elektronischen Schreibstiftes vermieden bzw. minimiert werden können, sowie derart gewählt werden, dass diese Einfederung bzw. Abfederung bzw. Dämpfung des Kraftübertragungselements, z.B. der Schreibmine, nicht irritierend auf den Anwender wirkt.

Beispielsweise kann der elektronische Schreibstift so gestaltet sein, dass der mögliche Verschiebeweg des Kraftsensors z.B. zwischen 0,2 und 0,5 mm liegen kann.

Dies kann die Robustheit und Anfälligkeit des elektronischen Schreibstiftes verbessern, da der wenigstens eine Kraftsensor so vor Beschädigung durch Druckkraftüberbelastungen, beispielsweise verursacht bei einem Sturz bzw. Aufprall eines elektronischen Schreibstiftes auf einen harten Untergrund oder bei unsachgemäßer Benutzung des elektronischen Schreibstiftes, geschützt werden kann.

Zudem kann das elastische Mittel, z.B. über eine/seine Federspannung, dazu dienen, eine Vorspannung der Einheit bzw. Baugruppe umfassend den Kraftsensor und das Kraftübertragungselement, z.B. die Schreibmine, zu bewirken, so dass z.B. fertigungsbedingte Toleranzen in deren Abmessungen leicht ausgeglichen werden können, ohne daß der Kraftsensor und/oder das Kraftübertragungselement, z.B. die Schreibmine, im unbelasteten elektronischen Schreibstift lose liegen und klappern.

Das wenigstens eine elastische Mittel des elektronischen Schreibstiftes kann dabei z.B. ein Federelement umfassen.

Dabei kann das Federelement z.B. als Biegefeder, beispielsweise als Blattfeder, ausgeführt sein.

Andere elastische Mittel, z.B. Schenkelfedern, Spiralfedern oder andere elastische Elemente wie mit Fluiden befüllte elastische Kissen oder elastische Schäume, bzw. andere Federelementausführungen, wie z.B. Torsionsfedern oder Tellerfedern, sind jedoch auch denkbar.

Das wenigstens eine elastische Mittel des elektronischen Schreibstiftes kann elektrisch leitfähig sein und ein Teil des elastischen Mittels kann z.B. als Polkontakt, z.B. als Minuspolkontakt, der wenigstens einen elektrischen Spannungsquelle dienen.

Ebenfalls kann ein Teil des wenigstens einen Kraftsensors, z.B. ein Teil einer elektrischen Verbindungsleitung des wenigstens einen Kraftsensors, als Polkontakt, z.B. als Pluspolkontakt, der wenigstens elektrischen Spannungsquelle dienen.

Dies kann beispielsweise Bauraum und Bauteile sparen und eine kompaktere, preiswertere Bauform des elektronischen Schreibstiftes ermöglichen.

Der wenigstens eine Kraftsensor des elektronischen Schreibstiftes kann mit der wenigstens einen Spannungsquelle und mit dem wenigstens einen elastischen Mittel z.B. über wenigstens einen flexiblen elektrischen Leiter verbunden sein.

Unter einem flexiblen elektrischen Leiter kann hier beispielsweise eine Flexplatine und/oder ein flexibles elektrisches Flachbandkabel verstanden werden.

Darüber hinaus kann / können der wenigstens eine Kraftsensor und die wenigstens eine Spannungsquelle zusammen verschiebbar entlang der Längsachse des elektronischen Schreibstiftes einzeln oder zusammen verschiebbar im Wesentlichen parallel zu der Längsachse des elektronischen Schreibstiftes angeordnet sein.

Die gemeinsame Verschiebung kann dabei gegen das bzw. in Richtung auf das wenigstens eine elastische Mittel erfolgen.

Verschiebungen des Kraftsensors sind beispielsweise jedoch auch in die Gegenrichtung, d.h. weg vom elastischen Mittel, möglich. So kann unter anderem beispielsweise der Kraftsensor, ggf. zusammen mit einer mit dem Kraftsensor verbundenen optionalen zweiten Leiterplatte bzw. Hilfsplatine, beim Einsetzen der Spannungsquelle in eine vorgegebene Ausgangsposition geschoben werden.

Die Verwendung eines flexiblen elektrischen Leiters kann dabei die Verschiebung des Kraftsensors und/oder die Verschiebung der wenigstens einen Spannungsquelle entlang der Längsachse des elektronischen Schreibstiftes oder im Wesentlichen parallel zu der Längsachse des elektronischen Schreibstiftes erleichtern.

Das wenigstens eine elastische Mittel des elektronischen Schreibstiftes kann im Übrigen mit einer ersten Leiterplatte verbunden sein, bzw. auf einer ersten Leiterplatte angeordnet sein.

Diese beispielhafte erste Leiterplatte kann beispielsweise eine/die Prozessorleiterplatte sein, auf der sich z.B. wenigstens eine digitale Steuereinheit, beispielsweise zur Auswertung der Daten des wenigstens einen Kraftsensors des elektronischen Schreibstiftes, befinden kann.

Der wenigstens eine Kraftsensor des elektronischen Schreibstiftes kann im Übrigen mit einer zweiten Leiterplatte verbunden sein, bzw. auf einer auf einer zweiten Leiterplatte angeordnet sein.

Diese beispielhafte zweite Leiterplatte kann beispielsweise eine/die Sensorleiterplatte sein, welche fest mit dem Gehäuse des elektronischen Schreibstifts verbunden sein kann, und auf der sich z.B. die Sensorik zur Positions- und Bewegungsbestimmung des elektronischen Schreibstiftes befinden kann. Dadurch kann z.B. die Sensorik in der Nähe der Spitze angebracht werden, um die Bewegungen der Stiftspitze bzw. Schreibminenspitze besonders gut erfassen zu können.

Der wenigstens eine Kraftsensor kann, wie bereits erwähnt, dabei mit der wenigstens einen Spannungsquelle und mit dem wenigstens einem elastischen Mittel über wenigstens einen flexiblen elektrischen Leiter verbunden sein.

Zudem kann beispielsweise der wenigstens eine Kraftsensor über eine flexible Abzweigung des wenigstens einen flexiblen elektrischen Leiters mit der zweiten Leiterplatte verbunden sein.

Die Verwendung einer flexiblen Abzweigung des wenigstens einen flexiblen elektrischen Leiters zum Anschluss an den wenigstens einen Kraftsensor und/oder zur optionalen Verbindung des wenigstens einen Kraftsensors mit der optionalen zweiten Leiterplatte bzw. Hilfsplatine kann es unter anderem ermöglichen, dass der wenigstens eine Kraftsensor und/oder die optionale zweite Leiterplatte bzw. Hilfsplatine aus einer festgelegten Ebene des wenigstens einen flexiblen elektrischen Leiters geschwenkt werden kann und somit beispielsweise der wenigstens eine Kraftsensor, bzw. die Kontaktfläche des wenigstens einen Kraftsensors, im Wesentlichen senkrecht zur Schreibmine angeordnet werden kann.

Dabei können wiederum der wenigstens eine Kraftsensor und die wenigstens eine Spannungsquelle und die zweite Leiterplatte zusammen verschiebbar entlang der Längsachse des elektronischen Schreibstiftes sein bzw. angeordnet sein oder zusammen verschiebbar im Wesentlichen parallel zu der Längsachse des elektronischen Schreibstiftes sein bzw. angeordnet sein.

Die gemeinsame Verschiebung kann dabei gegen das bzw. in Richtung auf das wenigstens eine elastische Mittel erfolgen.

Eine derartige beispielhafte Anordnung, d.h. eine zusammen verschiebbare Baugruppe umfassend wenigstens einen Kraftsensor und wenigstens eine Spannungsquelle und eine zweite Leiterplatte, miteinander verbunden über einen flexiblen elektrischen Leiter, wobei der wenigstens eine Kraftsensor über eine flexible Abzweigung des flexiblen elektrischen Leiters mit der zweiten Leiterplatte verbunden ist, kann ebenfalls z.B. durch Verschiebung gegen ein Stoppmittel, beispielsweise einen Anschlag, die Aufnahme der auf den Kraftsensor z.B. von der Schreibmine ausgeübten Druckkraft begrenzen.

Der elektronische Schreibstift kann, wie erwähnt, wenigstens ein Stoppmittel aufweisen, welches dazu konfiguriert sein kann, das Kraftübertragungselement, z.B. die Schreibmine, nach einem vorgegebenen Verschiebeweg des Kraftübertragungselements, z.B. der Schreibmine, entlang der Längsachse des elektronischen Schreibstiftes oder im Wesentlichen parallel zur Längsachse des elektronischen Schreibstiftes zu stoppen.

Der beispielhafte vorgegebene Verschiebeweg des Kraftübertragungselements, z.B. der Schreibmine, bzw. die Position des wenigstens einen Stoppmittels kann dabei so gewählt sein, dass über die gesamte Länge des Verschiebeweges die auf den wenigstens einen Kraftsensor wirkende Druckkraft, bzw. die durch das wenigstens eine elastische Mittel erzeugte Druckkraft, unterhalb der Druckkraftbelastungsgrenze des Kraftsensors liegt.

Ein beispielhaftes Verfahren zur Vermeidung einer Überbelastung eines Kraftsensor zur Messung einer Schreibdruckkraft für einen elektronischen Schreibstift, wobei der elektronische Schreibstift wenigstens eine elektrische Spannungsquelle, wenigstens eine digitale Steuereinheit, ein Kraftübertragungselement, beispielsweise eine Schreibmine, sowie wenigstens einen Kraftsensor zur Messung einer Schreibdruckkraft und wenigstens ein elastisches Mittel aufweisen kann, und wobei das wenigstens eine elastische Mittel dazu konfiguriert sein kann, einer auf den wenigstens einen Kraftsensor einwirkenden Druckkraft eine der einwirkenden Druckkraft entgegenwirkende Kraft zu erzeugen, kann beispielsweise folgende Schritte umfassen:
- Verschiebung des Kraftübertragungselements, z.B. der Schreibmine, entlang der Längsachse des elektronischen Schreibstiftes oder Verschiebung des Kraftübertragungselements im Wesentlichen parallel zur Längsachse des elektronischen Schreibstiftes zur Ausübung einer Druckkraft auf den wenigstens einen Kraftsensor und zur Verschiebung des wenigstens einen Kraftsensors entlang der Längsachse des elektronischen Schreibstiftes oder im Wesentlich parallel zur Längsachse des elektronischen Schreibstiftes in Richtung auf das wenigstens eine elastische Mittel und entgegen der vom dem wenigstens einen elastischen Mittel erzeugbaren Kraft, z.B. einer Federkraft, und
- Dämpfung der durch besagte Verschiebung des Kraftübertragungselements, z.B. der Schreibmine, auf den wenigstens einen Kraftsensor ausgeübten Druckkraft durch das wenigstens eine elastische Mittel, d.h. durch eine Begrenzung des Verschiebeweges des Kraftübertragungselements bzw. durch die von dem elastischen Mittel aufgrund seiner Deformation bzw. Kompression erzeugten Kraft, z.B. Federkraft, welche der auf den wenigstens einen Kraftsensor von der Verschiebung des Kraftübertragungselements, z. B. der Schreibmine, ausgeübten Druckkraft entgegengesetzt ist.

Dabei kann beispielsweise die Länge des Verschiebeweges des Kraftübertragungselements, z.B. der Schreibmine, entlang der Längsachse des elektronischen Schreibstiftes oder im Wesentlich parallel zur Längsachse des elektronischen Schreibstiftes in Richtung auf das wenigstens eine elastische Mittel so gewählt bzw. so festgelegt werden, dass über die gesamte Länge des Verschiebeweges, die auf den wenigstens einen Kraftsensor wirkende Druckkraft, bzw. z.B. die durch das wenigstens eine elastische Mittel erzeugte Kraft, z.B. Federkraft, unterhalb der Druckkraftbelastungsgrenze des Kraftsensors liegen kann.

Zudem kann z.B. nach einem Verschiebeweg des Kraftübertragungselements, z.B. der Schreibmine, entlang der Längsachse des elektronischen Schreibstiftes oder im Wesentlichen parallel zur Längsachse des elektronischen Schreibstiftes in Richtung auf das wenigstens eine elastische Mittel, wobei über die gesamte Länge des Verschiebeweges die auf den wenigstens einen Kraftsensor wirkende Druckkraft unterhalb der Druckkraftbelastungsgrenze des Kraftsensors liegt, die Verschiebebewegung des Kraftübertragungselements, z.B. der Schreibmine, durch wenigstens ein Stoppmittel gestoppt bzw. begrenzt werden.

Wie bereits erwähnt, kann darüber hinaus der Kraftsensor einen verschiebbar gelagerten Meßzapfen aufweisen, welcher beispielsweise konfiguriert ist für Verschiebungen entlang der Längsachse des elektronischen Schreibstiftes oder für Verschiebungen im Wesentlichen parallel zu der Längsachse des elektronischen Schreibstiftes.

Besagtes beispielhaftes Kraftübertragungselement, z.B. eine Schreibmine, kann dabei z.B. gegen besagten beispielhaften möglichen Meßzapfen des Kraftsensors drücken und den Meßzapfen verschieben, und dabei beispielsweise den Meßzapfen wenigstens teilweise in das Kraftsensorgehäuse drücken, oder den Meßzapfen zusammen mit dem Kraftsensor verschieben.

Das optionale Stoppmittel bzw. der optionale Anschlag zur Begrenzung der Verschiebbarkeit des Kraftübertragungselements, z.B. der Schreibmine, insbesondere zur Begrenzung der Verschiebbarkeit des Kraftübertragungselements in Richtung des der Schreibstiftspitze entgegengesetzten Endes des Schreibstiftes, kann wie erwähnt beispielsweise als Spant des Gehäuses des elektronischen Schreibstiftes ausgeführt sein.

Das Stoppmittel bzw. der Anschlag bzw. der Spant kann also die Verschiebung des Kraftübertragungselements, z.B. der Schreibmine, entlang der Längsachse des elektronischen Schreibstiftes oder im Wesentlichen parallel zur Längsachse des elektronischen Schreibstiftes begrenzen, ohne dabei jedoch die Verschiebbarkeit des Kraftsensors zu beschränken.

Die Anordnung bzw. die Wahl der Geometrie und/oder die Wahl der Wandstärke eines solchen optionalen Spantes kann dabei, wie oben erwähnt, beispielsweise in Abhängigkeit der Geometrie, z.B. der Höhe bzw. Breite des Kraftsensors, und/oder in Abhängigkeit eines vorgegebenen Verschiebeweges des Kraftübertragungselements, z.B. der Schreibmine, erfolgen.

Beispielsweise kann die Wandstärke des optionalen Spantes in etwa gleich der Höhe bzw. Länge des Kraftsensors abzüglich eines gewünschten vorgegebenen Verschiebeweges des Kraftübertragungselements, z.B. der Schreibmine, sein.

Wie ebenfalls bereits erwähnt, kann alternativ oder zusätzlich der Kraftsensor selbst als Stoppmittel wirken bzw. konfiguriert sein.

Beispielsweise ist es unter anderem denkbar, dass das Gehäuse des Kraftsensors und/oder das Kraftübertragungselement so gestaltet sein können, dass das Kraftübertragungselement, welches z.B. gegen einen beispielhaften möglichen Meßzapfen drücken und ihn verschieben kann, auf einen Teil des Kraftsensorgehäuses, welches nicht der Meßzapfen ist, aufsetzen kann, und so die mögliche maximale Länge des möglichen Verschiebeweges des Kraftübertragungselements begrenzen kann.

Der wenigstens eine Kraftsensor des elektronischen Schreibstiftes kann daher vor Beschädigung durch Druckkraftüberbelastung z.B. aufgrund von Stürzen oder unsachgemäßen Gebrauch, geschützt werden.

Folgende Figuren stellen beispielhaft dar:
- **Fig. 1:**: Beispielhafte schematische Darstellung einiger möglicher Komponenten eines erfindungsgemäßen elektronischen Schreibstiftes
- **Fig. 2:**: Beispielhafter schematischer Verbindungsplan
- **Fig. 3:**: Beispielhafter Einbauwinkel des Kraftsensors
- **Fig. 4a:**: Beispielhafte schematische Darstellung eines erfindungsgemäßen elektronischen Schreibstiftes in einem ersten Zustand
- **Fig. 4b:**: Beispielhafte schematische Darstellung eines erfindungsgemäßen elektronischen Schreibstiftes in einem zweiten Zustand

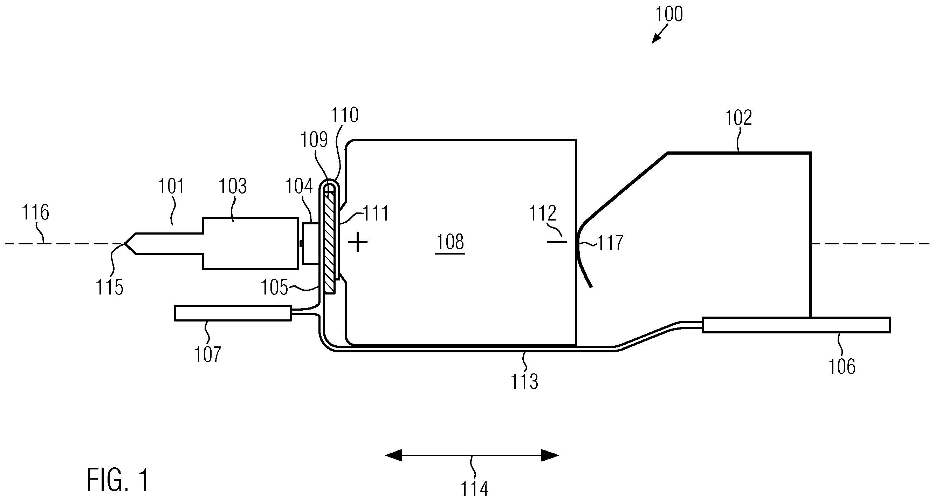

Die **Fig.1** zeigt beispielhaft eine schematische Darstellung einiger möglicher Komponenten 100 eines erfindungsgemäßen elektronischen Schreibstiftes, welcher wenigstens einen Kraftsensor 104 zur Messung einer Schreibdruckkraft aufweisen kann.

Der elektronische Schreibstift kann dabei eine als Kraftübertragungselement wirkende Schreibmine 101 aufweisen, z.B. mit einer Schreibminenspitze 115 und einer beispielhaften Schreibminenpatrone 103.

Wie oben erwähnt kann das beispielhafte Kraftübertragungselement 101 zur Übertragung einer / der Schreibdruckkraft z.B. auch als Leiterplatine bzw. Leiterplatte oder als ein anderes Bauteil geeignet zur Übertragung einer Druckkraft, insbesondere einer Schreibdruckkraft, ausgeführt sein.

Der elektronische Schreibstift kann dabei eine Spannungsquelle 108 aufweisen, die mit einem elastischen Mittel 102, z.B. einem elektrisch leitfähigen Federelement, beispielsweise einer Blattfeder im Gehäuse (nicht dargestellt) des elektronische Schreibstiftes verbaut sein kann.

Die Bezugszeichen 111 und 112 bezeichnen dabei beispielsweise den Pluspol 111 und den Minuspol 112 der Spannungsquelle 108.

Mit Hilfe des wenigstens eines flexiblen elektrischen Leiters 113, z.B. eines flexiblen elektrischen Flachbandkabels, können die elektronischen Komponenten, also z.B. die Spannungsquelle 108, die erste Leiterplatte, z.B. Hauptplatine bzw. Prozessorleiterplatte 106, die optionale zweite Leiterplatte, z.B. Hilfsplatine bzw. Sensorleiterplatte 107, und der Kraftsensor 104 miteinander verbunden sein.

Das elastische Mittel 102 kann dabei elektrisch leitend sein und beispielweise über Kontaktfläche 117 des elastischen Mittels, als Polkontakt, z.B. als Minuspolkontakt, für die wenigstens eine elektrische Spannungsquelle 108 dienen.

Dadurch kann beispielsweise eine zusätzliche separate Leitung zum Minuspol 112 eingespart werden.

Ebenfalls kann ein Teil des Kraftsensors 104, z.B. ein Teil 110 bzw. eine Verlängerung der flexiblen Abzweigung 105 des wenigstens einen flexiblen elektrischen Leiters 113 in Kontakt mit einem Pol der Spannungsquelle, z.B. dem Pluspol 111 der Spannungsquelle, treten und als Polkontakt bzw. Pluspolkontakt dienen.

Besagter Teil 110 der flexiblen Abzweigung 105 des wenigstens einen flexiblen elektrischen Leiters 113 kann dabei beispielsweise um ein beispielhaftes optionales Versteifungselement 109 umgelegt werden. Besagtes optionales Versteifungselement 109 kann z.B. eine Glasfaser-Epoxy-Platte umfassen und der Versteifung des flexiblen elektrischen Leiters 113 insbesondere im Bereich von aufgelöteten Elementen dienen.

Diese beispielhafte Anordnung kann Bauraum sparen, die Teileanzahl klein halten und eine kompaktere Bauform des elektronischen Schreibstiftes ermöglichen.

Darüber hinaus können der wenigstens eine Kraftsensor 104 und die wenigstens eine Spannungsquelle 108 zusammen verschiebbar entlang der Längsachse 116 des elektronischen Schreibstiftes oder zusammen verschiebbar im Wesentlichen parallel zu der Längsachse 116 des elektronischen Schreibstiftes angeordnet sein.

Beispielsweise kann über eine Verschiebung der Schreibmine 101, welche am Kraftsensor 104 anliegen kann, eine Druckkraft auf den Kraftsensor 104 ausgeübt werden und so eine Verschiebung des Kraftsensors 104 bzw. eine gemeinsame Verschiebung des Kraftsensors 104 und der Spannungsquelle 108 in Richtung des elastischen Mittels 102 erfolgen.

Das Bezugszeichen 114 kennzeichnet dabei beispielsweise mögliche Verschiebebewegungsrichtungen des Kraftsensors 104 und/oder der Spannungsquelle 108 und/oder anderer möglicher verschiebbarer Komponenten, z.B. Hilfsplatine bzw. Sensorleiterplatte 107, entlang der Längsachse 116 des elektronischen Schreibstiftes oder im Wesentlichen parallel zu der Längsachse 116 des elektronischen Schreibstiftes.

Mit anderen Worten kann die beispielhafte gemeinsame Verschiebung von Kraftsensor 104 und Spannungsquelle 108 dabei gegen das wenigstens eine elastische Mittel 102 erfolgen und das elastische Mittel 102 deformieren bzw. komprimieren und so eine Gegenkraft zu einer auf den Kraftsensor 104 einwirkenden Druckkraft, z.B. einer Schreibdruckkraft, erzeugt werden.

Auch kann die optionale zweite Leiterplatte bzw. Sensorleiterplatte 107 verschiebbar entlang der Längsachse 116 des elektronischen Schreibstiftes oder im Wesentlichen parallel zu der Längsachse 116 des elektronischen Schreibstiftes sein, also beispielsweise auch mit dem Kraftsensor 104 zusammen verschiebbar sein,
Die Verwendung des beispielhaften flexiblen elektrischen Leiters 113 kann dabei die Verschiebung des Kraftsensors 104 und/oder die Verschiebung der Sensorleiterplatte 107 und/oder die Verschiebung der wenigstens einen Spannungsquelle 108 entlang der Längsachse des elektronischen Schreibstiftes oder im Wesentlichen parallel zu der Längsachse 116 des elektronischen Schreibstiftes erleichtern.

Das wenigstens eine elastische Mittel 102 des elektronischen Schreibstiftes kann mit der ersten Leiterplatte 106 verbunden sein, z.B. mit der Leiterplatte 106 fest verlötet sein, bzw. auf der ersten Leiterplatte 106 angeordnet sein. Zusätzlich kann es durch optionale Stege im Gehäuse des Stiftes gehalten und in seiner Bewegung eingeschränkt sein.

Diese beispielhafte erste Leiterplatte 106 kann beispielsweise die Hauptplatine bzw. Prozessorleiterplatte sein, welche fest mit dem Gehäuse (nicht dargestellt) des elektronischen Schreibstifts verbunden sein kann, und auf der sich z.B. die wenigstens eine digitale Steuereinheit (nicht dargestellt) des elektronischen Schreibstiftes befinden kann und auf der sich z.B. weitere Messsensorik und Auswertesensorik, beispielsweise zur Auswertung der Daten des wenigstens einen Kraftsensors 104 des elektronischen Schreibstiftes, beispielsweise ein Analog-Digital-Wandler für die Kraftsensordaten, befinden kann.

Der wenigstens eine Kraftsensor 104 des elektronischen Schreibstiftes kann im Übrigen mit einer/der optionalen zweiten Leiterplatte 107 verbunden sein, bzw. auf einer/der zweiten Leiterplatte angeordnet sein.

Diese beispielhafte zweite Leiterplatte 107 kann beispielsweise die Nebenleiterplatte bzw. Sensorleiterplatte sein, auf der sich z.B. die Sensorik zur Positions- und Bewegungsbestimmung des elektronischen Schreibstiftes befinden kann. Dadurch kann z.B. die Sensorik in der Nähe der Spitze angebracht werden um die Bewegungen der Stiftspitze besonders gut erfassen zu können.

Der Kraftsensor 104 kann, wie bereits erwähnt, dabei mit der Spannungsquelle 108 und mit dem elastischen Mittel 102 über den flexiblen elektrischen Leiter 113 verbunden sein.

Zudem kann beispielsweise der Kraftsensor 104 über eine flexible Abzweigung 105 des flexiblen elektrischen Leiters mit der zweiten Leiterplatte 107 verbunden sein.

Die Verwendung einer flexiblen Abzweigung 105 des flexiblen elektrischen Leiters 113 zum Anschluss an den wenigstens einen Kraftsensor 104 und/oder zur optionalen Verbindung des wenigstens einen Kraftsensors 104 mit der optionalen zweiten Leiterplatte 107 bzw. Hilfsplatine kann es unter anderem ermöglichen, dass der wenigstens eine Kraftsensor 104 und/oder die optionale zweite Leiterplatte 107 bzw. Hilfsplatine aus einer festgelegten Ebene des flexiblen elektrischen Leiters geschwenkt werden kann und somit beispielsweise der wenigstens eine Kraftsensor 104, bzw. die Kontaktfläche des wenigstens einen Kraftsensors, im Wesentlichen senkrecht zur Schreibmine 101 angeordnet werden kann.

Wird nun beispielsweise das Kraftübertragungselement bzw. die Schreibmine 101 entlang der Längsachse des elektronischen Schreibstiftes oder im Wesentlichen parallel zur Längsachse 116 des elektronischen Schreibstiftes in Richtung auf das wenigstens eine elastische Mittel 102 verschoben, beispielsweise durch die beim Schreiben mit dem Schreibstift auf einem Schreibsubstrat (nicht dargestellt) auftretenden Druckkräfte, verschiebt, in der dargestellten beispielhaften Anordnung, die Schreibmine 101 also zugleich den Kraftsensor 104 und die Spannungsquelle 108 gegen das elastische Mittel 102, wobei das elastische Mittel 102 zudem auch als Polkontakt 117, z.B. als Minuspolkontakt, dienen kann.

Dabei kann beispielsweise die Länge des Verschiebeweges des Kraftübertragungselements bzw. der Schreibmine 101 entlang der Längsachse 116 des elektronischen Schreibstiftes oder im Wesentlich parallel zur Längsachse des elektronischen Schreibstiftes in Richtung auf das wenigstens eine elastische Mittel 102 so gewählt bzw. so festgelegt werden, dass über die gesamte Länge des Verschiebeweges, die auf den wenigstens einen Kraftsensor 104 wirkende Druckkraft, bzw. z.B. die durch das wenigstens eine elastische Mittel 102 erzeugte Kraft, z.B. Federkraft, welcher der z.B. durch das Schreiben auf einem Schreibsubstrat bewirkten Schreibdruckkraft der Schreibmine 101 entgegen gerichtet ist, unterhalb der Druckkraftbelastungsgrenze des Kraftsensors 104 liegen kann.

Darüber hinaus kann beispielsweise nach einem derartigen Verschiebeweg des Kraftübertragungselements bzw. der Schreibmine 101 entlang der Längsachse 116 des elektronischen Schreibstiftes oder im Wesentlich parallel zur Längsachse 116 des elektronischen Schreibstiftes in Richtung auf das wenigstens eine elastische Mittel, wobei über die gesamte Länge des Verschiebeweges die auf den wenigstens einen Kraftsensor 104 wirkende Druckkraft unterhalb der Druckkraftbelastungsgrenze des Kraftsensors liegen kann, die Verschiebebewegung der Schreibmine durch wenigstens ein Stoppmittel (nicht dargestellt) gestoppt werden.

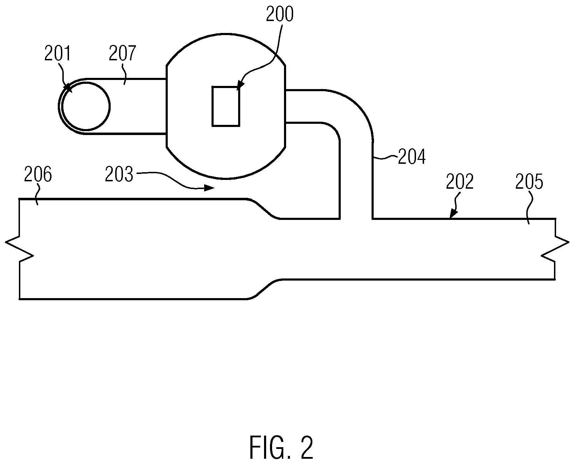

Die **Fig. 2** zeigt beispielhaft einen schematischen Verkabelungsplan des wenigstens einen Kraftsensors 200 mit anderen Komponenten eines beispielhaften elektronischen Schreibstiftes.

Dabei ist der Kraftsensor 200 beispielhaft als Kraftsensor-Kelle dargestellt.

Der beispielhafte Kraftsensor ist dabei beispielsweise über eine flexible Abzweigung 204 mit einem beispielhaften flexiblen elektrischen Leiter 202 verbunden, wobei der flexibler elektrischen Leiter 202 beispielsweise einen Teil 205 aufweisen kann, welche zu einer (nicht dargestellten) ersten Leiterplatte, z.B. einer Hauptplatine die z.B. eine digitale Steuereinheit des elektronischen Schreibstiftes beherbergt, und zu wenigstens einem elastischen Mittel (nicht dargestellt) führen kann, sowie ebenso zu einer möglichen zweiten Leiterplatte 206, z.B. Hilfsplatine, führen kann.

Zudem kann über eine beispielhafte Verlängerung 207 der flexiblen Abzweigung 204 des wenigstens einen flexiblen elektrischen Leiters 202 des elektronischen Schreibstiftes (nicht dargestellt) ein Polkontakt 201 zwischen Spannungsquelle und Kraftsensor, z.B. ein Pluspolkontakt, hergestellt werden.

Darüber hinaus kann eine beispielhafte Lücke 203 zwischen der möglichen zweiten Leiterplatte 206, z.B. Hilfsplatine, und dem Kraftsensor 200 vorhanden sein, welche beispielsweise minimal sein kann.

Wie erwähnt kann / können der beispielhafte flexible Leiter 202 und seine Teile bzw. Verlängerungen und/oder Abzweigungen und der Kraftsensor 200 und die Leiterplatte 206 so konfiguriert sein, dass besagte Komponenten zusammen verschiebbar sein können entlang der Längsachse des elektronischen Schreibstiftes (nicht dargestellt) oder im Wesentlich parallel zur Längsachse des elektronischen Schreibstiftes (nicht dargestellt) gegen die Spannungsquelle des elektronischen Schreibstiftes (nicht dargestellt) und zusammen mit der Spannungsquelle verschiebbar sein können in Richtung auf das wenigstens eine elastische Mittel des elektronischen Schreibstiftes (nicht dargestellt).

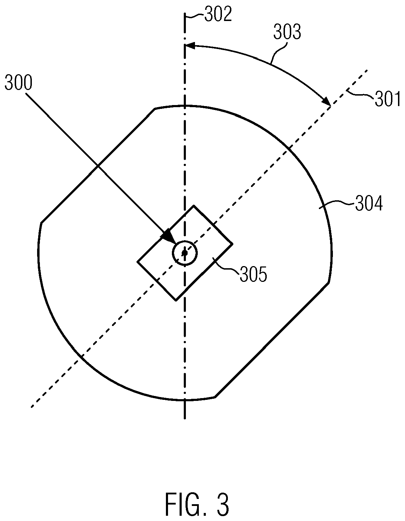

Die **Fig. 3** zeigt einen beispielhaften Drehwinkel bzw. Einbauwinkel 303 des Kraftsensors 304 relativ zu einer beispielhaften Trennebene 303 des Gehäuses des elektronischen Schreibstiftes (nicht dargestellt).

Dabei kann der Kraftsensor 304 beispielsweise mit seiner Kontaktfläche 305 im Wesentlichen senkrecht zur Schreibmine bzw. senkrecht zur Längsachse 300 des elektronischen Schreibstiftes angeordnet sein und der Einbauwinkel 303 beispielsweise als Winkel zwischen der beispielhaften Längsachse 300 des Kraftsensors und der Trennebene 302 des Gehäuses des elektronischen Schreibstiftes festgelegt werden.

Der Einbauwinkel 303 (z.B. wie dargestellt als Winkel zwischen der beispielhaften Trennebene 302 und der beispielhaften Längsachse 301 des Kraftsensors 304) kann dabei von Null verschieden sein, d.h. der Kraftsensor kann gedreht verbaut sein, wobei der Wert des Einbauwinkels 303 beispielsweise von der Länge der Verbindung des flexiblen Leiters (nicht dargestellt), welche den Kraftsensor 304 mit anderen Komponenten des elektronischen Schreibstiftes verbinden kann (siehe z.B. Fig. 2 und Fig. 1), bzw. der Länge einer flexiblen Abzweigung des flexiblen Leiters, abhängen kann.

Ein derartiger Kraftsensor bzw. Drucksensor 304 kann unter anderem beispielsweise auch ein Gehäuse aufweisen sowie einen aus dem Gehäuse heraus ragenden verschiebbaren Zapfen (nicht dargestellt). Beispielsweise kann dabei der Zapfen verschiebbar gelagert sein, z.B. für Verschiebungen entlang der Längsachse des elektronischen Schreibstiftes oder für Verschiebungen im Wesentlichen parallel zu der Längsachse des elektronischen Schreibstiftes. Dabei kann der verschiebbare Zapfen z.B. zudem im Wesentlichen senkrecht zu einer Oberfläche eines möglichen Kraftsensorgehäuses aus dem besagten Gehäuse herausragen. Ein solcher Zapfen kann auch als Meßzapfen bezeichnet werden. Besagtes beispielhaftes Kraftübertragungselement, z.B. eine Schreibmine, kann dabei z.B. gegen einen möglichen Meßzapfen des Kraftsensors drücken und den Meßzapfen verschieben oder den Meßzapfen zusammen mit dem Kraftsensor verschieben.

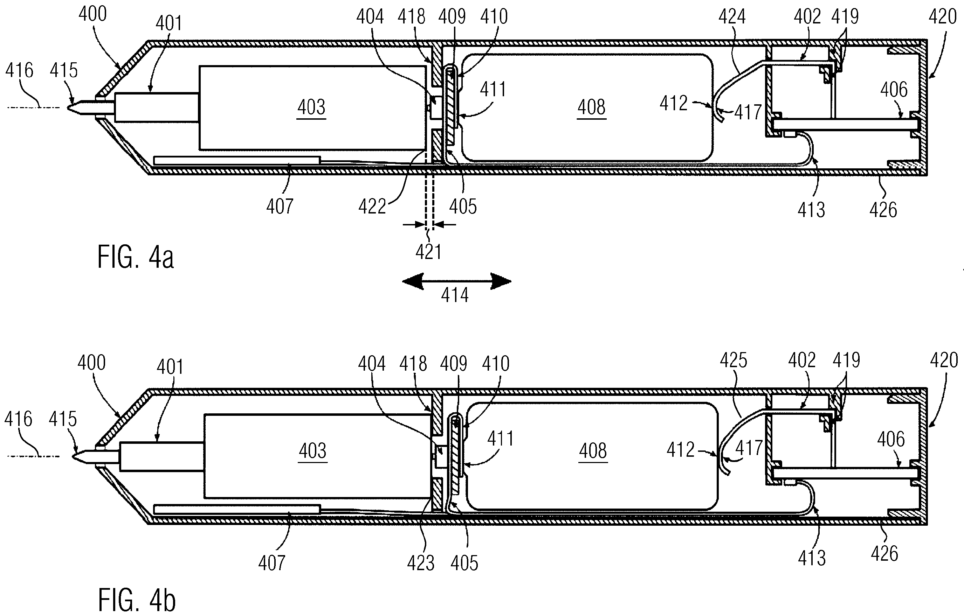

Die **Fig. 4a** zeigt eine beispielhafte schematische Darstellung eines erfindungsgemäßen elektronischen Schreibstiftes 400, welcher eine elektrische Spannungsquelle 408, eine digitale Steuereinheit (nicht dargestellt), eine Schreibmine 401, sowie einen Kraftsensor 404 zur Messung einer Schreibdruckkraft aufweisen kann.

Das Kraftübertragungselement 401 kann beispielsweise als Schreibmine ausgeführt sein, wobei die beispielhafte Schreibmine dabei neben einer beispielhaften Schreibminenspitze 415 auch eine beispielhafte Schreibminenpatrone 403 umfassen kann.

Zudem weist der Schreibstift 400 ein beispielhaftes elastisches Mittel 402, z.B. eine Biegefeder, auf, welches dazu konfiguriert sein kann, einer auf den Kraftsensor 404 einwirkenden Druckkraft eine der einwirkenden Druckkraft entgegenwirkende Kraft erzeugen zu können.

Analog zu der beispielhaften Darstellung der Fig.1 bezeichnen die Bezugszeichen 411 und 412 dabei beispielsweise den Pluspol 411 und den Minuspol 412 der Spannungsquelle 408.

Mit Hilfe eines flexiblen elektrischen Leiters 413, z.B. eines flexiblen elektrischen Flachbandkabels, können die elektronischen Komponenten, also z.B. die Spannungsquelle 408, die erste Leiterplatte, z.B. Hauptplatine 406 bzw. Prozessorleiterplatte, die zweite Leiterplatte, z.B. Sensorleiterplatte 407, und der Kraftsensor 404 miteinander verbunden sein.

Das elastische Mittel 402 kann dabei elektrisch leitend sein und beispielweise über die Kontaktfläche 417 des elastischen Mittels, als Polkontakt, z.B. als Minuspolkontakt, für die wenigstens eine elektrische Spannungsquelle 408 dienen.

Dadurch kann beispielsweise eine zusätzliche separate Leitung zum Minuspol 412 eingespart werden.

Ebenfalls kann ein Teil des Kraftsensors 404, z.B. ein Teil 410 bzw. eine Verlängerung der flexiblen Abzweigung 405 des wenigstens einen flexiblen elektrischen Leiters 413 in Kontakt mit einem Pol der Spannungsquelle, z.B. dem Pluspol 411 der Spannungsquelle, treten und als Polkontakt bzw. Pluspolkontakt dienen.

Besagter Teil 410 der flexiblen Abzweigung 405 des wenigstens einen flexiblen elektrischen Leiters 413 kann dabei beispielsweise um ein beispielhaftes optionales Versteifungselement 409 umgelegt werden. Besagtes optionales Versteifungselement 409 kann z.B. eine Glasfaser-Epoxy-Platte umfassen und unter anderem der Versteifung des flexiblen elektrischen Leiters 413 insbesondere im Bereich von aufgelöteten Elementen dienen.

Diese beispielhafte Anordnung kann Bauraum sparen und eine kompaktere Bauform des elektronischen Schreibstiftes ermöglichen.

Darüber hinaus können das Kraftübertragungselement, z.B. die Schreibmine 401, der wenigstens eine Kraftsensor 404 und die wenigstens eine Spannungsquelle 408 einzeln oder zusammen verschiebbar entlang der Längsachse 416 des elektronischen Schreibstiftes einzeln oder zusammen verschiebbar im Wesentlichen parallel zu der Längsachse 416 des elektronischen Schreibstiftes angeordnet sein.

Beispielsweise kann über eine Verschiebung des Kraftübertragungselements, z.B. der Schreibmine 401, welches/welche, wie dargestellt, am Kraftsensor 404 anliegen kann, eine Druckkraft auf den Kraftsensor 404 ausgeübt werden und so eine Verschiebung des Kraftsensors 404 bzw. eine gemeinsame Verschiebung des Kraftsensors 404 und der Spannungsquelle 408 in Richtung des elastischen Mittels 402 erfolgen.

Das Bezugszeichen 414 kennzeichnet dabei beispielsweise mögliche Verschiebebewegungsrichtungen des Kraftübertragungselements bzw. der Schreibmine 401 und/oder des Kraftsensors 404 und/oder der Spannungsquelle 408 und/oder anderer möglicher verschiebbarer Komponenten, z.B. der zweiten Leiterplatte 407, entlang der Längsachse 416 des elektronischen Schreibstiftes oder im Wesentlichen parallel zu der Längsachse 416 des elektronischen Schreibstiftes.

Mit anderen Worten kann die beispielhafte gemeinsame Verschiebung von Kraftsensor 404 und Spannungsquelle 408 dabei gegen das wenigstens eine elastische Mittel 402 erfolgen und das elastische Mittel 402 deformieren bzw. komprimieren und so eine Gegenkraft zu einer auf den Kraftsensor 404 einwirkenden Druckkraft, z.B. einer Schreibdruckkraft, erzeugt werden.

Auch kann die zweite Leiterplatte bzw. Sensorleiterplatte 407 verschiebbar entlang der Längsachse 416 des elektronischen Schreibstiftes oder im Wesentlichen parallel zu der Längsachse 416 des elektronischen Schreibstiftes sein, also beispielsweise auch mit dem Kraftsensor 404 zusammen verschiebbar sein.

Die Verwendung des beispielhaften flexiblen elektrischen Leiters 413 kann dabei die Verschiebung des Kraftsensors 404 und/oder die Verschiebung der Sensorleiterplatte 407 und/oder die Verschiebung der wenigstens einen Spannungsquelle 408 entlang der Längsachse des elektronischen Schreibstiftes oder im Wesentlichen parallel zu der Längsachse 416 des elektronischen Schreibstiftes erleichtern.

Das wenigstens eine elastische Mittel 402 des elektronischen Schreibstiftes kann mit der ersten Leiterplatte 406 verbunden sein, z.B. mit der Leiterplatte 406 fest verlötet sein, bzw. auf der ersten Leiterplatte 406 angeordnet sein. Zusätzlich kann das elastische Element durch optionale Haltemittel wie z.B. Stege 419 im Gehäuse des Stiftes gehalten und in seiner Bewegung eingeschränkt sein.

Die beispielhafte erste Leiterplatte 406 kann beispielsweise die Hauptplatine bzw. Prozessorleiterplatte sein, welche fest mit dem Gehäuse 426 und/oder mit dem der Stiftspitze, z.B. Schreibminenspitze, gegenüberliegenden Ende 420 des elektronischen Schreibstifts 400 verbunden sein kann, und auf der sich z.B. die wenigstens eine digitale Steuereinheit (nicht dargestellt) des elektronischen Schreibstiftes 400 befinden kann und auf der sich beispielsweise Auswertesensorik, beispielsweise zur Auswertung der Daten des wenigstens einen Kraftsensors 404 des elektronischen Schreibstiftes, beispielsweise ein Analog-Digital-Wandler für die Kraftsensordaten, befinden kann.

Der wenigstens eine Kraftsensor 404 des elektronischen Schreibstiftes 400 kann im Übrigen mit einer/der optionalen zweiten Leiterplatte 407 verbunden sein, bzw. auf einer/der zweiten Leiterplatte angeordnet sein.

Diese beispielhafte zweite Leiterplatte 407 kann beispielsweise die Nebenleiterplatte bzw. Sensorleiterplatte sein, auf der sich z.B. die Sensorik zur Positions- und Bewegungsbestimmung des elektronischen Schreibstiftes befinden kann. Dadurch kann z.B. die Sensorik in der Nähe der Spitze angebracht werden um die Bewegungen der Stiftspitze besonders gut erfassen zu können.

Der Kraftsensor 404 kann, wie bereits erwähnt, dabei mit der Spannungsquelle 408 und mit dem elastischen Mittel 402 über den flexiblen elektrischen Leiter 413 verbunden sein.

Zudem kann beispielsweise der Kraftsensor 404 über eine flexible Abzweigung 405 des flexiblen elektrischen Leiters mit der zweiten Leiterplatte 407 verbunden sein.

Die Verwendung einer flexiblen Abzweigung 405 des flexiblen elektrischen Leiters 413 zum Anschluss an den wenigstens einen Kraftsensor 404 und/oder zur optionalen Verbindung des wenigstens einen Kraftsensors 404 mit der optionalen zweiten Leiterplatte 407 bzw. Hilfsplatine kann es unter anderem ermöglichen, dass der wenigstens eine Kraftsensor 404 und/oder die optionale zweite Leiterplatte 407 bzw. Hilfsplatine aus einer festgelegten Ebene des flexiblen elektrischen Leiters geschwenkt werden kann und somit beispielsweise der wenigstens eine Kraftsensor 404, bzw. die Kontaktfläche des wenigstens einen Kraftsensors, im Wesentlichen senkrecht zum Kraftübertragungselement bzw. senkrecht zur Schreibmine 401 angeordnet werden kann.

Wird nun beispielsweise das Kraftübertragungselement, z.B. die Schreibmine 401 entlang der Längsachse des elektronischen Schreibstiftes oder im Wesentlich parallel zur Längsachse 416 des elektronischen Schreibstiftes in Richtung auf das wenigstens eine elastische Mittel 402 verschoben, beispielsweise durch die beim Schreiben mit dem Schreibstift auf einem Schreibsubstrat (nicht dargestellt) auftretenden Druckkräfte, verschiebt, in der dargestellten beispielhaften Anordnung, das Kraftübertragungselement bzw. die Schreibmine 401 also zugleich den Kraftsensor 404 und die Spannungsquelle 408 gegen das elastische Mittel 402, wobei das elastische Mittel 402 zudem auch als Polkontakt 417, z.B. als Minuspolkontakt, dienen kann.

Dabei kann beispielsweise die Länge des Verschiebeweges des Kraftübertragungselement bzw. der Schreibmine 401 entlang der Längsachse 416 des elektronischen Schreibstiftes 400 oder im Wesentlich parallel zur Längsachse 416 des elektronischen Schreibstiftes 400 in Richtung auf das wenigstens eine elastische Mittel 402 so gewählt bzw. so festgelegt werden, dass über die gesamte Länge des Verschiebeweges, die auf den wenigstens einen Kraftsensor 404 wirkende Druckkraft, bzw. z.B. die durch das wenigstens eine elastische Mittel 402 erzeugte Kraft, z.B. Federkraft, welcher der z.B. durch das Schreiben auf einem Schreibsubstrat bewirkten Schreibdruckkraft der Schreibmine 401 entgegen gerichtet ist, unterhalb der Druckkraftbelastungsgrenze des Kraftsensors 404 liegen kann.

In der beispielhaften Darstellung der Fig. 4a befindet sich der Schreibstift 400 dabei in einem beispielhaften ersten Zustand in dem beispielsweise der Schreibstift 400 unbelastet ist, d.h. wobei der Kraftsensor 404 unbelastet ist, d.h. wobei keine bzw. nur eine minimale Kraft auf dem Kraftsensor 404 lastet, bzw. wobei z.B. keine von einer Nutzung des Schreibstiftes ausgehende Druckkraft auf dem Kraftübertragungselement bzw. auf der Schreibmine 401 bzw. auf dem Kraftsensor 404 lastet.

Der beispielhafte erste Zustand des Schreibstiftes 400, kann beispielsweise durch eine erste Position 422 des Kraftübertragungselements bzw. der Schreibmine 401 beschrieben werden.

Dabei kann sich z.B. die Schreibmine 401 wie dargestellt in der beispielhaften Position 422 befinden, bei der die Schreibmine 401 bzw. die Schreibpatrone 403 an dem Kraftsensor 404 anliegt ohne dabei eine Kraft bzw. Druckkraft auf den Kraftsensor 404 auszuüben, bzw. ohne eine Kraft bzw. Druckkraft auf den Kraftsensor 404 auszuüben, welche den Kraftsensor 404 signifikant belasten würde oder verschieben würde.

In diesem beispielhaften unbelasteten Zustand des Schreibstiftes 400 kann sich zudem das elastische Mittel 402 ebenfalls in einem ersten Zustand befinden, z.B. einem Ausgangszustand bzw. einer Ausgangsform 424.

Wird ein Druck auf das Kraftübertragungselement, z.B. die Schreibmine 401 bzw. auf die Stiftspitze, z.B. Schreibminenspitze 415, ausgeübt, kann sich das Kraftübertragungselement, z.B. die Schreibmine 401 entlang der Längsachse 416 des elektronischen Schreibstiftes oder im Wesentlichen parallel zur Längsachse 416 des elektronischen Schreibstiftes in Richtung auf das wenigstens eine elastische Mittel 402 verschieben, wobei über die gesamte Länge des Verschiebeweges die auf den wenigstens einen Kraftsensor 404 wirkende Druckkraft unterhalb der Druckkraftbelastungsgrenze des Kraftsensors liegen kann.

Die Verschiebebewegung des Kraftübertragungselements bzw. der Schreibmine 401 kann darüber hinaus durch wenigstens ein Stoppmittel wie beispielsweise durch einen Anschlag bzw. durch einen Spant 418 gestoppt bzw. begrenzt werden. Das optionale Stoppmittel bzw. der optionale Spant 418 kann dabei in das Gehäuse 426 des elektronischen Schreibstiftes 400 integriert sein.

Das optionale Stoppmittel 418 kann dabei so angeordnet sein, dass der beispielhafte Abstand 421 zwischen Kraftübertragungselement bzw. Schreibmine 401 bzw. Schreibminenpatrone 403 und dem Stoppmittel 418 einen beispielhaften (maximalen) Verschiebeweg festlegt.

Das Stoppmittel bzw. der Anschlag bzw. der Spant 418 kann also die mögliche Verschiebung des Kraftübertragungselements bzw. der Schreibmine 401 entlang der Längsachse 416 des elektronischen Schreibstiftes oder im Wesentlichen parallel zur Längsachse des elektronischen Schreibstiftes begrenzen.

Gleichzeitig kann das Stoppmittel bzw. der Anschlag bzw. der Spant 418 so gestaltet sein, dass eine Verschiebbarkeit des Kraftsensors 404 entlang der Längsachse 416 des elektronischen Schreibstiftes oder im Wesentlichen parallel zu der Längsachse des elektronischen Schreibstiftes nicht begrenzt bzw. nicht beschränkt wird.

Da beispielsweise der Durchmesser des Kraftübertragungselements bzw. der Schreibmine 401 bzw. der Schreibpatrone 403 größer als der mittlere Durchmesser des Kraftsensors sein kann, kann beispielsweise das Stoppmittel bzw. der Anschlag 418 als durch einen in der Mitte durchbrochenen Spant innerhalb des Gehäuses 426 des elektronischen Schreibstiftes 400 realisiert werden.

Die Anordnung bzw. die Wahl der Geometrie und/oder die Wahl der Wandstärke eines solchen optionalen Spantes 418 kann dabei beispielsweise in Abhängigkeit der Geometrie, z.B. die Höhe bzw. Breite des Kraftsensors 404, und/oder in Abhängigkeit eines vorgegebenen Verschiebeweges des Kraftübertragungselements bzw. der Schreibmine 401 erfolgen.

Beispielsweise kann die Wandstärke des optionalen Spantes 418 in etwa gleich der Höhe bzw. Länge des Kraftsensors 404 abzüglich eines gewünschten vorgegebenen Verschiebeweges des Kraftübertragungselements bzw. der Schreibmine 401 sein.

Dabei kann der Kraftsensor 404 um den beispielhaften (maximalen) Verschiebeweg 421 des Kraftübertragungselements bzw. der Schreibmine dicker als das Stoppmittel /dicker als der Spant 418 sein, so dass z.B. bei geringen auf das Kraftübertragungselement bzw. auf die Schreibmine 401 ausgeübten Kräften der Kraftsensor 404 und das Kraftübertragungselement bzw. die Schreibmine 401 frei entlang oder im Wesentlichen parallel zur Längsachse 416 des Schreibstiftes verschiebbar sein können, und bei einer größeren auf das Kraftübertragungselement bzw. auf die Schreibmine bzw. Stiftspitze bzw. Schreibminenspitze 415 wirkenden Kraft, das Kraftübertragungselement bzw. die Schreibmine 401 gegen den Anschlag 418 gedrückt werden kann, um die auf den Kraftsensor 404 wirkende Kraft begrenzen zu können.

Die **Fig.4b** zeigt beispielhaft einen Schreibstift 400 analog oder identisch zum Schreibstift der Fig.4a.

Im Unterschied zur Fig. 4a ist der Schreibstift 400 hier jedoch in einem belasteten Zustand dargestellt, d.h. in einem Zustand wo eine Kraft auf das Kraftübertragungselement bzw. auf die Schreibmine 401 ausgeübt wird, welche das Kraftübertragungselement bzw. die Schreibmine 401 zusammen mit dem Kraftsensor 404 und der Spannungsquelle in Richtung auf das elastische Mittel 402 verschoben hat und das elastische Mittel 402 in einen Zustand mit einer anderen Form 425, bzw. in eine Deformation gegenüber einer unbelasteten Form, gebracht hat.

Diese beispielhafte Deformation 425 des elastischen Mittels kann aufgrund der Elastizität des elastischen Mittels eine Gegenkraft, z.B. eine Federkraft, erzeugen, welche der auf den wenigstens einen Kraftsensor einwirkenden Druckkraft entgegen gerichtet ist.

Der beispielhaft dargestellte belastete Zustand des Schreibstiftes, unter anderem gekennzeichnet durch die Position 423 des Kraftübertragungselements bzw. der Schreibmine 401, stellt zudem beispielhaft den Fall dar, dass die auf das Kraftübertragungselement bzw. auf die Schreibmine 401 ausgeübte Kraft genügend groß ist, das Kraftübertragungselement bzw. die Schreibmine 401 bzw. die Schreibpatrone gegen das mögliche Stoppmittel 418 zu drücken.

Mit anderen Worten hat sich das Kraftübertragungselement bzw. die Schreibmine 401 im dargestellten Fall maximal entlang der Längsachse des Schreibstiftes verschoben und das Stoppmittel 418 kann, neben dem elastischen Mittel 402, einen weiteren Beitrag dazu leisten, die auf den Kraftsensor 404 wirkende Kraft zu begrenzen, um den Kraftsensor 404 vor einer Überbelastung schützen zu können.

Es folgen 4 Blatt mit 4 Figuren. Die Bezugszeichen sind dabei wie folgt belegt.
- **100**: Beispielhafte Komponenten eines erfindungsgemäßen elektronischen Schreibstiftes
- **101**: Beispielhaftes Kraftübertragungselement, z.B. Schreibmine
- **102**: Beispielhaftes elastisches Mittel, z.B. Federelement, beispielsweise Blattfeder
- **103**: Beispielhafte Schreibminenpatrone
- **104**: Beispielhafter Kraftsensor
- **105**: Beispielhafte flexible Abzweigung des wenigstens einen flexiblen elektrischen Leiters 113
- **106**: Beispielhafte (erste) Leiterplatte, z.B. Hauptplatine oder Prozessorleiterplatte
- **107**: Beispielhafte (zweite) Leiterplatte, z.B. Hilfsplatine oder Sensorleiterplatte für Positionsbestimmungssensorik
- **108**: Beispielhafte Spannungsquelle, z.B. Batterie
- **109**: Beispielhaftes optionales Versteifungselement
- **110**: Beispielhafter Polkontakt, z.B. Pluspolkontakt, zwischen Spannungsquelle und Kraftsensor, bzw. beispielhaftes Teil der flexiblen Abzweigung des wenigstens einen flexiblen elektrischen Leiters in Kontakt mit einem Pol der Spannungsquelle, z.B. dem Pluspol der Spannungsquelle
- **111**: Beispielhafter Pluspol der Spannungsquelle
- **112**: Beispielhafter Minuspol der Spannungsquelle
- **113**: Beispielhafter flexibler elektrischer Leiter
- **114**: Beispielhafte Verschiebungsbewegung
- **115**: Beispielhafte Stiftspitze bzw. Schreibstiftspitze, z.B. Schreibminenspitze
- **116**: Beispielhafte Längsachse des elektronischen Schreibstiftes
- **117**: Beispielhafter Polkontakt, z.B. Minuspolkontakt, zwischen elastischem Mittel und Spannungsquelle, bzw. beispielhafte Kontaktfläche des elastischen Mittels, welche als Polkontakt, z.B. als Minuspolkontakt, mit der wenigstens einen elektrischen Spannungsquelle dient
- **200**: Beispielhafter Kraftsensor, z.B. als Kraftsensor-Kelle ausgeführt
- **201**: Beispielhafter Polkontakt zwischen Spannungsquelle und Kraftsensor, z.B. Pluspolkontakt
- **202**: Beispielhafter flexibler elektrischer Leiter
- **203**: Beispielhafte Lücke zwischen möglicher zweiter Leiterplatte, z.B. Hilfsplatine, und Kraftsensor
- **204**: Beispielhafte flexible Abzweigung des flexiblen elektrischen Leiters
- **205**: Beispielhafter Teil des flexiblen elektrischen Leiters der zur beispielhaften ersten Leiterplatte, z.B. Hauptplatine (nicht dargestellt), und dem wenigstens einen elastischen Element (nicht dargestellt) führt.
- **206**: Beispielhafte mögliche zweite Leiterplatte, z.B. Hilfsplatine
- **207**: Beispielhafte Verlängerung der flexiblen Abzweigung des wenigstens einen flexiblen elektrischen Leiters zur Herstellung eines beispielhaften Polkontaktes zwischen Spannungsquelle und Kraftsensor, z.B. eines Pluspolkontaktes
- **300**: Beispielhafte Längsachse eine eines beispielhaften elektronischen Schreibstiftes
- **301**: Beispielhafte Längsachse des Kraftsensors
- **302**: Beispielhafte Trennebene des Gehäuses des beispielhaften elektronischen Schreibstiftes
- **303**: Beispielhafter Winkel zwischen Längsachse des Kraftsensors und Trennebene 302
- **304**: Beispielhafter Kraftsensor
- **305**: Beispielhafte Kraftsensorkontaktfläche
- **400**: Beispielhafter elektronischer Schreibstift
- **401**: Beispielhaftes Kraftübertragungselement, beispielhafte Schreibmine
- **402**: Beispielhaftes elastisches Mittel
- **403**: Beispielhafte Schreibminenpatrone
- **404**: Beispielhafter Kraftsensor
- **405**: Beispielhafte flexible Abzweigung des wenigstens einen flexiblen elektrischen Leiters 413
- **406**: Beispielhafte (erste) Leiterplatte, z.B. Hauptplatine oder Prozessorleiterplatte
- **407**: Beispielhafte (zweite) Leiterplatte, z.B. Hilfsplatine oder Sensorleiterplatte für Positionsbestimmungssensorik
- **408**: Beispielhafte Spannungsquelle, z.B. Batterie
- **409**: Beispielhaftes optionales Versteifungselement
- **410**: Beispielhafter Polkontakt, z.B. Pluspolkontakt, zwischen Spannungsquelle und Kraftsensor, bzw. beispielhaftes Teil der flexiblen Abzweigung des wenigstens einen flexiblen elektrischen Leiters in Kontakt mit einem Pol der Spannungsquelle, z.B. dem Pluspol der Spannungsquelle
- **411**: Beispielhafter Pluspol der Spannungsquelle
- **412**: Beispielhafter Minuspol der Spannungsquelle
- **413**: Beispielhafter flexibler elektrischer Leiter
- **414**: Beispielhafte Verschiebungsbewegung
- **415**: Beispielhafte Stiftspitze bzw. Schreibstiftspitze, z.B. Schreibminenspitze
- **416**: Beispielhafte Längsachse des elektronischen Schreibstiftes
- **417**: Beispielhafter Polkontakt, z.B. Minuspolkontakt, zwischen elastischem Mittel und Spannungsquelle, bzw. beispielhafte Kontaktfläche des elastischen Mittels, welche als Polkontakt, z.B. als Minuspolkontakt, mit der wenigstens einen elektrischen Spannungsquelle
- **418**: Beispielhafter Spant als Stoppmittel bzw. als Verschiebewegbegrenzung
- **419**: Beispielhafter weiterer optionaler Spant oder optionales Gestänge oder optionale Stege zur Halterung des elastischen Mittels
- **420**: Beispielhaftes der Stiftspitze bzw. der Schreibstiftspitze, z.B. der Schreibminenspitze, gegenüberliegendes Ende des Schreibstiftes
- **421**: Beispielhafter Abstand zwischen Kraftübertragungselement, z.B. Schreibmine bzw. Schreibminenpatrone, und möglichem Stoppmittel, beispielhafter (maximaler) Verschiebeweg
- **422**: Beispielhafte erste Position des Kraftübertragungselements bzw. der Schreibmine bzw. Schreibminenpatrone, beispielhafte Position des Kraftübertragungselements bzw. der Schreibmine im unbelasteten Zustand des Schreibstiftes, i.e. z.B. wenn keine Kraft / Druckkraft von dem Kraftübertragungselement / von der Schreibmine auf den Kraftsensor ausgeübt wird.
- **423**: Beispielhafte zweite Position des Kraftübertragungselements bzw. der Schreibmine bzw. Schreibminenpatrone, beispielhafte Position des Kraftübertragungselements bzw. der Schreibmine im belasteten Zustand des Schreibstiftes, i.e. z.B. wenn eine Kraft / Druckkraft von dem Kraftübertragungselement / von der Schreibmine auf den Kraftsensor ausgeübt wird, beispielsweise eine Kraft welche das Kraftübertragungselement bzw. die Schreibmine an ein Stoppmittel drückt.
- **424**: Beispielhafter erster Zustand des elastischen Mittels, beispielhafter Zustand des elastischen Mittels im beispielhaften unbelasteten Zustand des Schreibstiftes
- **425**: Beispielhafter zweiter Zustand des elastischen Mittels, beispielhafter Zustand des elastischen Mittels im beispielhaften belasteten Zustand des Schreibstiftes, beispielhafte Deformation des elastischen Mittels
- **426**: Beispielhaftes Gehäuse des elektronischen Schreibstiftes

## Patentansprüche

1. Elektronischer Schreibstift mit Schreibstiftpositionserkennung, umfassend wenigstens eine elektrische Spannungsquelle (108), wenigstens eine digitale Steuereinheit, ein Kraftübertragungselement (101), sowie wenigstens einen Kraftsensor (104) zur Messung einer Schreibdruckkraft, wobei der elektronische Schreibstift wenigstens ein elastisches Mittel (102) aufweist, und wobei das wenigstens eine elastische Mittel (102) dazu konfiguriert ist, einer auf den wenigstens einen Kraftsensor (104) einwirkenden Druckkraft eine der einwirkenden Druckkraft entgegenwirkende Kraft zu erzeugen, **dadurch gekennzeichnet, dass** der wenigstens eine Kraftsensor (104) mit der wenigstens einen Spannungsquelle (108) und mit dem wenigstens einen elastischen Mittel (102) über wenigstens einen flexiblen elektrischen (113) Leiter verbunden ist, und wobei der wenigstens eine Kraftsensor (104) und die wenigstens eine Spannungsquelle (108) zusammen verschiebbar entlang der Längsachse (116) des elektronischen Schreibstiftes oder zusammen verschiebbar im Wesentlichen parallel zu der Längsachse (116) des elektronischen Schreibstiftes angeordnet sind und zudem eine Verschiebung des wenigstens einen Kraftsensors zusammen mit der wenigstens eine Spannungsquelle entlang der Längsachse des elektronischen Schreibstiftes oder im Wesentlich parallel zur Längsachse des elektronischen Schreibstiftes in Richtung auf das wenigstens eine elastische Mittel und entgegen der vom dem wenigstens einen elastischen Mittel erzeugbaren Kraft, z.B. einer Federkraft, bewirkt, und die durch besagte Verschiebung des Kraftübertragungselements auf den wenigstens einen Kraftsensor ausgeübte Druckkraft durch das wenigstens eine elastische Mittel begrenzt wird.

2. Elektronischer Schreibstift nach Anspruch 1, wobei dass das wenigstens eine elastische Mittel (102) ein Federelement umfasst.

3. Elektronischer Schreibstift nach Anspruch 2, wobei das Federelement als Biegefeder, z.B. als Blattfeder, ausgeführt ist.

4. Elektronischer Schreibstift nach einem der vorherigen Ansprüche, wobei der wenigstens eine Kraftsensor (104) verschiebbar entlang der Längsachse (116) des elektronischen Schreibstiftes oder verschiebbar im Wesentlichen parallel zu der Längsachse (116) des elektronischen Schreibstiftes angeordnet ist.

5. Elektronischer Schreibstift nach einem der vorherigen Ansprüche, wobei das wenigstens eine elastische Mittel (102) elektrisch leitfähig ist und ein Teil des wenigstens einen elastischen Mittels (102) als Polkontakt (117), z.B. als Minuspolkontakt, mit der wenigstens einen elektrischen Spannungsquelle (108) dient.

6. Elektronischer Schreibstift nach einem der vorherigen Ansprüche, wobei ein Teil des wenigstens einen Kraftsensors (104) als Polkontakt (110), z.B. als Pluspolkontakt, mit der wenigstens elektrischen Spannungsquelle (108) dient.

7. Elektronischer Schreibstift nach einem der vorherigen Ansprüche, wobei das wenigstens eine elastische Mittel (102) mit einer ersten Leiterplatte (106) verbunden ist.

8. Elektronischer Schreibstift nach einem der vorherigen Ansprüche, wobei der wenigstens eine Kraftsensor (104) mit einer zweiten Leiterplatte (107) verbunden ist.

9. Elektronischer Schreibstift nach Anspruch 8, wobei der wenigstens eine Kraftsensor (104) mit der wenigstens einen Spannungsquelle (108) und mit dem wenigstens einen elastischen Mittel (102) über wenigstens einen flexiblen elektrischen Leiter (113) verbunden ist und wobei der wenigstens eine Kraftsensor (104) über eine flexible Abzweigung (105) des wenigstens einen flexiblen elektrischen Leiters mit der zweiten Leiterplatte (107) verbunden ist.

10. Elektronischer Schreibstift nach einem der Ansprüche 8 bis 9, wobei der wenigstens eine Kraftsensor (104) und die wenigstens eine Spannungsquelle (108) und die zweite Leiterplatte (107) zusammen verschiebbar entlang der Längsachse (116) des elektronischen Schreibstiftes oder zusammen verschiebbar im Wesentlichen parallel zu der Längsachse (116) des elektronischen Schreibstiftes angeordnet sind.

11. Elektronischer Schreibstift nach einem der vorherigen Ansprüche, wobei das Kraftübertragungselement eine Schreibmine ist.

12. Elektronischer Schreibstift nach einem der Ansprüche 4 bis 11, wobei der elektronische Schreibstift wenigstens ein Stoppmittel aufweist, welches dazu konfiguriert ist, das Kraftübertragungselement (101) nach einem vorgegebenen Verschiebeweg des Kraftübertragungselements entlang der Längsachse (116) des elektronischen Schreibstiftes oder im Wesentlichen parallel zur Längsachse (116) des elektronischen Schreibstiftes zu stoppen, wobei das Stoppmittel beispielsweise ein Spant des Stiftgehäuses oder z.B. ein Teil eines Kraftsensorgehäuses ist.

13. Verfahren zur Vermeidung einer Überbelastung eines Kraftsensor (104) zur Messung einer Schreibdruckkraft für einen elektronischen Schreibstift welcher wenigstens eine elektrische Spannungsquelle (108), wenigstens eine digitale Steuereinheit, ein Kraftübertragungselement (101), sowie wenigstens einen Kraftsensor (104) zur Messung einer Schreibdruckkraft und wenigstens ein elastisches Mittel (102) aufweist, wobei das wenigstens eine elastische Mittel (102) dazu konfiguriert ist einer auf den wenigstens einen Kraftsensor (104) einwirkenden Druckkraft eine der einwirkenden Druckkraft entgegenwirkende Kraft zu erzeugen, und wobei eine Verschiebung des Kraftübertragungselements entlang der Längsachse des elektronischen Schreibstiftes oder eine Verschiebung des Kraftübertragungselements im Wesentlichen parallel zur Längsachse des elektronischen Schreibstiftes eine Druckkraft auf den wenigstens einen Kraftsensor ausübt, **dadurch gekennzeichnet, dass** der wenigstens eine Kraftsensor (104) mit der wenigstens einen Spannungsquelle (108) und mit dem wenigstens einen elastischen Mittel (102) über wenigstens einen flexiblen elektrischen (113) Leiter verbunden ist, und
zudem eine Verschiebung des wenigstens einen Kraftsensors (104) zusammen mit der wenigstens eine Spannungsquelle (108) entlang der Längsachse (116) des elektronischen Schreibstiftes oder im Wesentlich parallel zur Längsachse (116) des elektronischen Schreibstiftes in Richtung auf das wenigstens eine elastische Mittel (102) und entgegen der vom dem wenigstens einen elastischen Mittel (102) erzeugbaren Kraft, z.B. einer Federkraft, bewirkt, und
die durch besagte Verschiebung des Kraftübertragungselements (101) auf den wenigstens einen Kraftsensor (104) ausgeübte Druckkraft durch das wenigstens eine elastische Mittel (102) begrenzt wird.

14. Verfahren nach dem vorherigen Anspruch, wobei über die gesamte Länge des Verschiebeweges die auf den wenigstens einen Kraftsensor (104) wirkende Druckkraft, z.B. die durch das wenigstens eine elastische Mittel (102) erzeugte Kraft, z.B. Federkraft, unterhalb der Druckkraftbelastungsgrenze des Kraftsensors (104) liegt, und/oder wobei nach einem Verschiebeweg des Kraftübertragungselements (101), über dem die auf den wenigstens einen Kraftsensor (104) wirkende Druckkraft unterhalb der Druckkraftbelastungsgrenze des Kraftsensors (104) liegt, die Verschiebebewegung des Kraftübertragungselements (101) durch wenigstens ein Stoppmittel gestoppt wird.

## Claims

1. Electronic pen with pen position detection, comprising at least one electrical voltage source (108), at least one digital control unit, a force transmission element (101), and at least one force sensor (104) for measuring a writing pressure force, wherein the electronic pen has at least one elastic means (102), and wherein the at least one elastic means (102) is configured to generate a force opposing a pressure force acting on the at least one force sensor (104),
**characterized in that**
that the at least one force sensor (104) is connected to the at least one voltage source (108) and to the at least one elastic means (102) via at least one flexible electrical conductor (113), and wherein the at least one force sensor (104) and the at least one voltage source (108) are arranged displaceable together along the longitudinal axis (116) of the electronic pen or displaceable together substantially parallel to the longitudinal axis (116) of the electronic pen and further causing a displacement of the at least one force sensor together with the at least one voltage source along the longitudinal axis of the electronic pen or substantially parallel to the longitudinal axis of the electronic pen towards the at least one elastic means and against the force producible by the at least one elastic means, e.g. a spring force, and the pressure force exerted by said displacement of the force transmission element on the at least one force sensor is being limited by the at least one elastic means.

2. Electronic pen according to claim 1, wherein the at least one elastic means (102) comprises a spring element.

3. Electronic pen according to claim 2, wherein the spring element is designed as a bending spring, e.g. a leaf spring.

4. Electronic pen according to any of the preceding claims, wherein the at least one force sensor (104) is arranged displaceable along the longitudinal axis (116) of the electronic pen or displaceable substantially parallel to the longitudinal axis (116) of the electronic pen.

5. Electronic pen according to one of the preceding claims, wherein the at least one elastic means (102) is electrically conductive and a part of the at least one elastic means (102) serves as a pole contact (117), e.g. as a negative pole contact, with the at least one electrical voltage source (108).

6. Electronic pen according to one of the preceding claims, wherein a part of the at least one force sensor (104) serves as a pole contact (110), e.g. as a positive pole contact, with the at least one electrical voltage source (108).

7. Electronic pen according to any of the preceding claims, wherein the at least one elastic means (102) is connected to a first printed circuit board (106).

8. Electronic pen according to any of the preceding claims, wherein the at least one force sensor (104) is connected to a second printed circuit board (107).

9. Electronic pen according to claim 8, wherein the at least one force sensor (104) is connected to the at least one voltage source (108) and to the at least one elastic means (102) via at least one flexible electrical conductor (113) and wherein the at least one force sensor (104) is connected to the second printed circuit board (107) via a flexible branch (105) of the at least one flexible electrical conductor.

10. Electronic pen according to any one of claims 8 to 9, wherein the at least one force sensor (104) and the at least one voltage source (108) and the second printed circuit board (107) are arranged displaceable together along the longitudinal axis (116) of the electronic pen or displaceable together substantially parallel to the longitudinal axis (116) of the electronic pen.

11. Electronic pen according to any of the previous claims, wherein the force transmitting element is a refill.

12. Electronic pen according to any one of claims 4 to 11, wherein the electronic pen comprises at least one stop means configured to stop the force transmission element (101) after a predetermined displacement path of the force transmission element along the longitudinal axis (116) of the electronic pen or substantially parallel to the longitudinal axis (116) of the electronic pen, wherein the stop means is for example a bulkhead of the pen housing or e.g. a part of a force sensor housing.

13. Method for avoiding overloading a force sensor (104) for measuring a writing pressure force for an electronic pen which has at least one electrical voltage source (108), at least one digital control unit, a force transmission element (101), as well as at least one force sensor (104) for measuring a writing pressure force and at least one elastic means (102), wherein the at least one elastic means (102) is configured to generate a pressure force acting on the at least one force sensor (104) to generate a force opposing the acting pressure force, and wherein a displacement of the force transmission element along the longitudinal axis of the electronic pen or a displacement of the force transmission element substantially parallel to the longitudinal axis of the electronic pen exerts a pressure force on the at least one force sensor,
**characterised in that**
said at least one force sensor (104) is connected to said at least one voltage source (108) and to said at least one elastic means (102) via at least one flexible electrical conductor (113), and further causing a displacement of the at least one force sensor (104) together with the at least one voltage source (108) along the longitudinal axis (116) of the electronic pen or substantially parallel to the longitudinal axis (116) of the electronic pen towards the at least one elastic means (102) and against the force producible by the at least one elastic means (102), e.g. a spring force, and the pressure force exerted by said displacement of the force transmission element (101) on the at least one force sensor (104) is being limited by the at least one elastic means (102).

14. Method according to the preceding claim, wherein over the entire length of the displacement path the pressure force acting on the at least one force sensor (104), e.g. the force generated by the at least one elastic means (102), e.g. spring force, lies below the pressure force load limit of the force sensor (104), and/or wherein after a displacement path of the force transmission element (101), over which the pressure force acting on the at least one force sensor (104) lies below the pressure force load limit of the force sensor (104), the displacement movement of the force transmission element (101) is stopped by at least one stopping means.

## Revendications

1. Stylo électronique avec détection de la position du stylo, comprenant au moins une source de tension électrique (108), au moins une unité de commande numérique, un élément de transmission de force (101) et au moins un capteur de force (104) pour mesurer une force de pression d'écriture,
dans lequel le stylo électronique comporte au moins un moyen élastique (102), et dans lequel ledit au moins un moyen élastique (102) est configuré pour générer une force s'opposant à une force de pression agissant sur ledit au moins un capteur de force (104), **caractérisé en ce que** le au moins un capteur de force (104) est connecté audit moins une source de tension (108) et audit au moins un moyen élastique (102) par l'intermédiaire d'au moins un conducteur électrique flexible (113), et dans lequel ledit au moins un capteur de force (104) et ladite au moins une source de tension (108) sont agencés pour se déplacer ensemble le long de l'axe longitudinal (116) du stylo électronique ou se déplacer ensemble sensiblement parallèlement à l'axe longitudinal (116) du stylo électronique, et en outre un déplacement dudit au moins un capteur de force avec ladite au moins une source de tension le long de l'axe longitudinal du stylo électronique ou sensiblement parallèlement à l'axe longitudinal du stylo électronique dans la direction dudit au moins un moyen élastique et contre la force qui peut être générée par ledit au moins un moyen élastique, par exemple une force de ressort, et la force de pression exercée par ledit déplacement de l'élément de transmission de la force sur ledit au moins un capteur de force est limitée par ledit au moins un moyen élastique.

2. Stylo électronique selon la revendication 1, dans lequel ledit au moins un moyen élastique (102) comprend un élément de ressort.

3. Stylo électronique selon la revendication 2, dans lequel l'élément de ressort est conçu comme un ressort de flexion, par exemple comme un ressort à lame.

4. Stylo électronique selon l'une des revendications précédentes, dans lequel ledit au moins un capteur de force (104) est disposé de manière à pouvoir être déplacé le long de l'axe longitudinal (116) du stylo électronique ou de manière à pouvoir se déplacer plus ou moins parallèlement à l'axe longitudinal (116) du stylo électronique.

5. Stylo électronique selon l'une des revendications précédentes, dans lequel ledit au moins un moyen élastique (102) est électriquement conducteur et une partie dudit au moins un moyen élastique (102) sert de contact polaire (117), par exemple un contact polaire négatif, avec ladite au moins une source de tension électrique (108).

6. Stylo électronique selon l'une des revendications précédentes, dans lequel une partie dudit au moins un capteur de force (104) sert de contact polaire (110), par exemple comme contact polaire positif, avec ladite au moins une source de tension électrique (108).

7. Stylo électronique selon l'une des revendications précédentes, dans lequel ledit au moins un moyen élastique (102) est connecté à une première carte de circuit imprimé (106).

8. Stylo électronique selon l'une des revendications précédentes, dans lequel ledit au moins un capteur de force (104) est connecté à une seconde carte de circuit imprimé (107).

9. Stylo électronique selon la revendication 8, dans lequel ledit au moins un capteur de force (104) est relié à ladite au moins une source de tension (108) et audit au moins un moyen élastique (102) par l'intermédiaire d'au moins un conducteur électrique flexible (113), et dans lequel ledit au moins un capteur de force (104) est relié à la seconde carte de circuit imprimé (107) par l'intermédiaire d'une branche flexible (105) dudit au moins un conducteur électrique flexible.

10. Stylo électronique selon l'une quelconque des revendications 8 à 9, dans lequel ledit au moins un capteur de force (104) et ladite au moins une source de tension (108) et la seconde carte de circuit imprimé (107) sont disposés de manière à pouvoir se déplacer ensemble le long de l'axe longitudinal (116) du stylo électronique ou à pouvoir se déplacer ensemble sensiblement parallèlement à l'axe longitudinal (116) du stylo électronique.

11. Stylo électronique selon l'une des revendications précédentes, dans lequel l'élément de transmission de la force est une recharge.

12. Stylo électronique selon l'une quelconque des revendications 4 à 11, ledit stylo électronique comprenant au moins un moyen d'arrêt configuré pour arrêter l'élément de transmission de force (101) après un trajet de déplacement prédéterminé de l'élément de transmission de force le long de l'axe longitudinal (116) du stylo électronique ou plus ou moins parallèlement à l'axe longitudinal (116) du stylo électronique, dans lequel le moyen d'arrêt est par exemple une cloison du logement du stylo ou par exemple une partie d'un logement de capteur de force.

13. Procédé pour éviter la surcharge d'un capteur de force (104) pour la mesure d'une force de pression d'écriture pour un stylo électronique qui présente au moins une source de tension électrique (108), au moins une unité de commande numérique, un élément de transmission de force (101), ainsi qu'au moins un capteur de force (104) pour la mesure d'une force de pression d'écriture et au moins un moyen élastique (102), dans lequel ledit au moins un moyen élastique (102) est configuré pour générer une force s'opposant à une force de pression agissant sur ledit au moins un capteur de force (104), et dans lequel un déplacement de l'élément de transmission de force le long de l'axe longitudinal du stylo électronique ou un déplacement de l'élément de transmission de force plus ou moins parallèle à l'axe longitudinal du stylo électronique exerce une force de pression sur ledit au moins un capteur de force, **caractérisé en ce que** ledit au moins un capteur de force (104) est relié à ladite au moins une source de tension (108) et audit au moins un moyen élastique (102) par l'intermédiaire d'au moins un conducteur électrique flexible (113), et
provoque également un déplacement dudit au moins un capteur de force (104) conjointement avec ladite au moins une source de tension (108) le long de l'axe longitudinal (116) du stylo électronique ou plus ou moins parallèlement à l'axe longitudinal (116) du stylo électronique dans la direction vers ledit au moins un moyen élastique (102) et contre la force, par exemple une force de ressort, qui peut être générée par ledit au moins un moyen élastique (102), et
la force de pression exercée sur ledit au moins un capteur de force (104) par ledit déplacement de l'élément de transmission (101) est limitée par le au moins un moyen élastique (102).

14. Procédé selon la revendication précédente, dans lequel sur toute la longueur du trajet de déplacement, la force de pression agissant sur ledit au moins un capteur de force (104), par exemple la force générée par ledit au moins un moyen élastique (102), par exemple force de ressort, se trouve en dessous de la limite de charge de la force de pression du capteur de force (104), et/ou dans lequel, après un trajet de déplacement de l'élément de transmission de force (101), au-dessus duquel la force de pression agissant sur ledit au moins un capteur de force (104) est inférieur à la limite de charge de la force de pression du capteur de force (104), le mouvement de déplacement de l'élément de transmission de force (101) est arrêté par au moins un moyen d'arrêt.
